# EUROPÄISCHE PATENTSCHRIFT

(11) **EP 1 432 287 B1**
(45) Veröffentlichungstag und Bekanntmachung des Hinweises auf die Patenterteilung: **21.06.2006**
(21) Anmeldenummer: 02028198.6
(22) Anmeldetag: 19.12.2002
(51) Int. Cl.: H05B 3/50, H05B 3/14, F24H 3/04, B60H 1/22

(54) **Elektrische Heizvorrichtung mit Gehäuse**
Electrical heating device with housing
Dispositif de chauffage électrique avec boîtier

(43) Veröffentlichungstag der Anmeldung: 23.06.2004
(73) Patentinhaber: Catem GmbH & Co.KG, 76863 Herxheim bei Landau/Pfalz (DE)
(72) Erfinder: Bohlender, Franz, 76870 Kandel (DE)
(74) Vertreter: Grünecker, Kinkeldey, Stockmair & Schwanhäusser Anwaltssozietät

(56) Entgegenhaltungen:
- EP-A- 0 307 217
- EP-A- 0 333 906
- EP-A- 1 130 337
- DE-A- 19 706 199
- US-A- 5 057 672

## Beschreibung

Die Erfindung betrifft eine elektrische Heizvorrichtung, insbesondere als Zusatzheizung für ein Kraftfahrzeug, gemäß dem Oberbegriff des Patenanspruchs 1.

Für den Einsatz in Kraftfahrzeugen, insbesondere Kraftfahrzeugen mit neuen, verbrauchsoptimierten Motoren, in denen eine geringere Menge an Wärmeenergie anfällt, werden elektrische Zusatzheizungen zur Beheizung von Innenraum und Motor verwendet. Solche elektrischen Heizvorrichtungen sind jedoch auch für andere Einsatzzwecke geeignet, beispielsweise im Bereich von Hausinstallationen, insbesondere Raumklimatisierung, in Industrieanlagen und dergleichen.

Für eine solche elektrische Zusatzheizung für ein Kraftfahrzeug werden vorzugsweise PTC-Heizelemente mit Radiatorelementen in wärmeleitender Verbindung verwendet. Die von den PTC-Heizelementen erzeugte Wärme wird über die Radiatorelemente an die durchströmende Luft abgegeben. Die Gesamtanordnung aus einem geschichteten Aufbau von PTC-Heizelementen, Radiatorelementen und Kontaktblechen, die der Stromzuführung dienen, ist zur Erhöhung des Wirkungsgrads der Heizung in einer Klemmpressung in einem Rahmen gehalten. Durch die Klemmung wird eine hohe elektrische und thermische Kontaktierung der PTC-Heizelemente erreicht.

Der geschichtete Aufbau ist in einem stabilen Rahmen mit vorzugsweise U-förmigem Querschnitt gehalten. Dabei ist der Rahmen so ausgebildet, dass er den geschichteten Aufbau zusammenpresst. Die Klemmung kann alternativ durch Federelemente bewirkt werden, die in dem geschichteten Aufbau angeordnet sind. Damit der Rahmen die Federkräfte aufnehmen kann, ist er mechanisch besonders stabil, vorzugsweise mit einem U-förmigen Querschnitt ausgebildet. Eine solche herkömmliche Heizvorrichtung ist beispielsweise aus DE-A-101 21 568 bekannt.

Die Mindesthöhe der Längsholme eines solchen Rahmens mit U-förmigem Querschnitt (oder C-förmigem Querschnitt gemäß DE-A-101 21 568) beträgt bei den erforderlichen Klemmkräften in etwa 11 mm. Dadurch ergibt sich für die gesamte Heizvorrichtung eine für den Luftdurchlass nicht nutzbare Höhe von mindestens 22 mm. Eine solche Bauform mit außen liegender Klemmung bzw. außen liegendem Halterahmen weist somit einen hohen Flächenanteil auf, der nicht für den Luftdurchsatz nutzbar ist. Aus diesem Grund sind solche elektrischen Heizvorrichtungen zur Verwendung bei sehr geringen Einbauhöhen nicht geeignet.

Beim Zusammenbau elektrischer Heizvorrichtungen mit außen liegendem Halterahmen bzw. außen liegender Klemmung sind aufwendige Maßnahmen erforderlich, die den beim Zusammenbau hinderlichen Andruckkräften der Federn/des Rahmens entgegenwirken.

Aufgrund dieser Nachteile sind Heizvorrichtungen mit einem herkömmlichen Halterahmen für moderne Heizklimageräte, insbesondere für den Einbau in Kraftfahrzeuge, in immer geringerem Maße geeignet. Heizklimageräte für Mehrzonenklimatisierung in einem komfortbetonten Kraftfahrzeug erfordern zunehmend Heizvorrichtungen großer Länge, aber geringer Bauhöhe.

Außerdem weisen herkömmliche Konstruktionen mit einem Halterahmen, insbesondere aus Metall, ein hohes Gewicht auf. Für den Einbau in Kraftfahrzeuge ist es jedoch im Hinblich auf das Gesamtgewicht des Fahrzeugs wünschenswert, elektrische Zusatzheizungen mit einem besonders niedrigen Gewicht verwendeten zu können.

Eine weiterer Nachteil von Metallhalterahmen liegt in ihrer leitenden Oberfläche. Um die Sicherheit in Kraftfahrzeugen zu erhöhen, werden Metalloberflächen in zunehmenden Maße vermieden, damit ihrer Berührung gefahrlos möglich ist, d.h. ohne elektrische oder thermische Leitung. Dazu werden die oben beschriebenen Heizvorrichtungen vorzugsweise mit einer Umhüllung aus Kunststoff versehen, wie beispielsweise bei der in DE-A-101 21 568 dargestellten Heizvorrichtung.

Aus der DE 197 06 199 ist eine elektrische Heizvorrichtung als Zusatzheizer für ein Kraftfahrzeug bekannt, in dessen Rahmen ein geschichteter Aufbau mit mehreren Lagen von nebeneinander angeordneten PTC-Heizelementen mit dazwischen liegenden Kontaktblechen und zwischen den einzelnen Reihen von PTC-Heizelementen angeordneten Radiatorelementen vorgesehen ist. Über einzelne Kontaktbleche werden die Reihen in vorbestimmter Weise bestromt. Der geschichtete Aufbau soll in dem Rahmen unter Spannung gehalten werden, der darüber hinaus dem Erfordernis einer hinreichenden Isolation des geschichteten Aufbaus gegenüber der Umgehung Rechnung tragen soll. Hierzu wird gemäß der DE 197 06 199 vargeschlagen, den Rahmen aus einem thermoplastischen Material zu bilden und den Schichtaufbau dadurch vorzuspannen, dass die außenseitigen Längsschenkel einen lichten Abstand voneinander haben, der geringer als die Breite des Schichtaufbaus ist. Bei in dem Rahmen montierten Schichtaufbau sollen die Längsschenkel den Schichtaufbau dementsprechend dauerhaft aufgrund ihrer Elastizität verspannen. Es hat sich aber gezeigt, dass diese Ausgestaltung den praktischen Anforderungen nicht gerecht werden kann. So führt insbesondere die Erwärmung des Schichtaufbaus beim Betrieb der Heizeinrichtung zum Kriechen des Kunststoffs und damit zum Verlust der Eigenspannung des Gehäuses. Problematisch ist ferner die genaue Einstellung des lichten Abstandes der Längsschenkel unter Berücksichtigung einerseits der einzustellenden Verspannung des geschichteten Aufbaus und andererseits der Breite des Schichtaufbaus unter Berücksichtigung von Bedingungen, die bei der Montage der elektrischen Heizvorrichtung einzuhalten sind.

Aufgabe der Erfindung ist es, eine elektrische Heizvorrichtung mit einem verbesserten Aufbau anzugeben, der die oben-genannten Nachteile nicht besitzt.

Diese Aufgabe wird gelöst durch eine elektrische Heizvorrichtung mit den Merkmalen von Anspruch 1. Ein Gehäuse mit den Merkmalen von Anspruch 23 und ein Verfahren mit den Merkmalen von Anspruch 30.

Die erfindungsgemäße elektrische Heizvorrichtung und das Gehäuse für eine elektrische Heizvorrichtung verwenden ein neues Bauprinzip, bei dem die Funktion von Rahmen und Feder voneinander getrennt sind. Die PTC-Heizelemente, die Radiatorelemente und die Kontaktbleche werden unter Vorspannung von einem Federelement in einem Gehäuse gehalten. Das Gehäuse weist gegenüberliegende Öffnungen an den länglichen Stirnseiten zum Durchströmen der zu erwärmenden Luft auf. Die länglichen Stirnseiten sind mechanisch besonders stabil ausgebildet und können daher besonders hohe Kräfte aufnehmen. Zu diesem Zweck sind in Öffnungen der länglichen Stirnseiten für die durchströmende Luft Querverstrebungen vorgesehen, die die von dem Federelement erzeugten Klemmkräfte aufnehmen. Auf diese Weise sind hohe Klemmkräfte bei geringer Bauhöhe möglich. Mit dem erfindungsgemäßen Aufbau können elektrische Heizvorrichtungen vielfältiger eingesetzt werden, insbesondere auch bei nur geringer zur Verfügung stehender Bauhöhe.

Gemäß einer vorteilhaften Weiterbildung der Erfindung sind zusätzlich zu den Querverstrebungen in den Öffnungen der Gehäuseseiten Längsverstrebungen vorgesehen, so dass die Verstrebungen eine Gitterstruktur bilden. Dadurch können die Verstrebungen selbst besonders dünn gehalten werden, so dass sie den Luftdurchsatz nur unwesentlich behindern und dennoch ein Durchbiegen des Gehäuses wirksam verhindern.

Um eine Behinderung des Luftdurchsatzes zu minimieren, werden insbesondere die Längsverstrebungen so angeordnet, dass sie sich im Bereich der PTC-Heizelemente befinden.

Vorzugsweise ist das Gehäuse aus Kunststoff hergestellt. Ein wesentlicher Vorteil eines Kunststoffgehäuses liegt in seinem geringen Gewicht, seiner flexiblen Formbarkeit und seinen niedrigen Herstellungskosten.

In einer weiter vorteilhaften Ausführungsform der Erfindung sind in dem Gehäuse Positionierungsmittel vorgesehen, die PTC-Heizelemente in einer Ebene senkrecht zur Klemmrichtung auf gegenseitigem Abstand halten. Dabei sind die Positionierungsmittel vorzugsweise als Teil des Gehäuses ausgebildet. Dadurch ist kein separater Positionsrahmen zur Lagefixierung der PTC-Heizelemente innerhalb der Heizung mehr erforderlich.

Gemäß einer vorteilhaften Weiterbildung der Erfindung besitzt das Gehäuse eine seitliche Öffnung zum Einschieben des Federelementes nach dem Zusammenbau der Heizvorrichtung. Dadurch ist die Fertigung einer solchen Heizvorrichtung sehr viel einfacher, da keine speziellen Vorrichtungen zur Überwindung der Federkräfte beim Zusammenbau erforderlich sind. Die Feder wird erst dann in das Gehäuse eingeschoben, wenn das zusammengesetzte Gehäuse in der Lage ist, die von der Feder erzeugten Kräfte beim Zusammenpressen des geschichteten Aufbaus aufzunehmen. Vorzugsweise wird die Feder in einer Nut geführt.

Gemäß einer vorteilhaften Ausführungsform ist das Gehäuse aus zwei Halbschalen zusammengesetzt. Dadurch ist ein besonders einfacher Zusammenbau der Heizvorrichtung möglich. Dazu sind die Halbschalen zusammensteckbar ausgebildet. Durch die Verwendung von Rastzapfen oder Rastnasen, die beim Zusammenstecken der Halbschalen des Gehäuses ein Verrasten beider Halbschalen bewirken, ist ein besonders schneller Zusammenbau möglich.

Beide Halbschalen sind vorzugsweise so ausgebildet, dass sie das Gehäuse in etwa mittig zwischen den sich gegenüberliegenden, offen ausgebildeten Gehäuseseiten trennen. Dadurch ist das Gehäuse an den offen ausgebildeten Seiten besonders stabil und nur in der Mitte, d.h. an der Trennlinie beider Halbschalen, kann das Gehäuse keine oder nur geringe Klemmkräfte aufnehmen.

In einer besonderen Ausführungsform sind die beiden Halbschalen an ihren Trennlinien mit zusätzlichen Vorsprüngen und Vertiefungen versehen, die beim Zusammenstecken ineinander greifen und die Halbschalen miteinander verschränken. Das Gehäuse kann so auch im mittleren Bereich, an den Trennlinien beider Halbschalen, höhere Kräfte aufnehmen.

Das Federelement besteht vorzugsweise aus einem Blechteil mit schräg herausragenden Federsegmenten. Vorzugsweise ist das Federelement mit den Federsegmenten einstückig ausgebildet. Dadurch kann die Feder erstmals als Endlosteil hergestellt werden und von einer Rolle bei der Fertigung zugeführt werden. Herkömmlich muss jede Feder separat gefertigt und für unterschiedliche Längen individuell hergestellt werden. Aufgrund der Trennung von Gehäuse und Feder kann die Dicke der Federn von herkömmlich ca. 0,8 mm gemäß dem neuen Bauprinzip auf eine Dicke von in etwa 0,3 mm reduziert werden. Dadurch kann die Feder mit geringem Aufwand hergestellt werden, ohne dass die Effizienz der Heizvorrichtung vermindert wird.

Um einen hohen Wirkungsgrad der elektrischen Heizvorrichtung zu erreichen, ist für jede Position eines PTC-Heizelementes ein Federsegment vorgesehen, so dass eine die Klemmung der PTC-Heizelemente verbessert wird. Ein besonders hoher Wirkungsgrad ist durch eine Erhöhung der Klemmkräfte erreichbar, wobei erfindungsgemäß im Bereich eines PTC-Heizelementes eine Mehrzahl von Federsegmenten vorgesehen sind, vorzugsweise zwei oder drei.

Gemäß einer weiter bevorzugten Ausführungsform bestehen die Federn aus einem Blech, aus dem in Querrichtung schräg einzelne Federsegmente herausragen, die die Feder mechanisch so verstärken, dass eine Durchbiegung um die Längsachse der Feder nicht möglich ist. Dazu reichen die Federsegmente jeweils bis in den Randbereich der Feder, so dass sich die Feder an dem stabilen äußeren Gehäuserand abstützen kann. Das Gehäuse muss dadurch nur an seinen Rändern Kräfte aufnehmen und kann in der Mitte weniger stabil ausgebildet sein.

Gemäß einer besonderen Weiterbildung der elektrischen Heizvorrichtung ist zwischen den Längsverstrebungen und dem geschichteten Aufbau eine Dichtung vorgesehen.

Eine solche Dichtung, insbesondere als Silikondichtung, ist vorzugsweise einstückig ausgebildet und dichtet die gesamte Gitterstruktur ab.

Weitere vorteilhafte Ausgestaltungen der Erfindung sind Gegenstand der Unteransprüche.

Im Folgenden wird die vorliegende Erfindung anhand bevorzugter Ausführungsformen in Zusammenhang mit den beiliegenden Zeichnungen erläutert. Dabei zeigen die Zeichnungen im Einzelnen:
- Fig. 1: eine perspektivische Ansicht einer Halbschale des Gehäuses der elektrischen Heizvorrichtung, die teilweise bestückt ist,
- Fig. 2: eine perspektivische Ansicht einer Halbschale des Gehäuses der elektrischen Heizvorrichtung, die vollständig bestückt ist,
- Fig. 3: eine perspektivische Ansicht der elektrischen Heizvorrichtung,
- Fig. 4: eine perspektivische Ansicht der elektrischen Heizvorrichtung, bei der das Federelement eingeschoben wird,
- Fig. 5: eine perspektivische Ansicht einer anderen Ausführungsform der erfindungsgemäßen Heizvorrichtung,
- Fig. 6: eine weitere perspektivische Ansicht der Ausführungsform nach Fig. 5, bei der die Gehäuseseite beispielhaft an eine spezielle Steckergeometrie angepasst ist,
- Fig. 7: eine weitere Detailansicht der Ausführungsform nach Fig. 5,
- Fig. 8: eine perspektivische Ansicht einer weiteren Ausführungsform der erfindungsgemäßen Heizvorrichtung während des Zusammenbaus,
- Fig. 9: eine perspektivische Ansicht der zusammengesetzten Ausführungsform nach Fig. 8,
- Fig. 10: eine Detailansicht der Innenseite einer Gehäusehalbschale einer weiteren Ausführungsform der Erfindung,
- Fig. 11: eine Schnittansicht durch das zusammengesetzte Gehäuse gemäß der Ausführungsform nach Fig. 10,
- Fig. 12: eine vergrößerte Ansicht eines Details der Darstellung aus Fig. 11,
- Fig. 13: eine Innenansicht der Gitterstruktur der länglichen Gehäusestirnseiten mit Silikondichtungen,

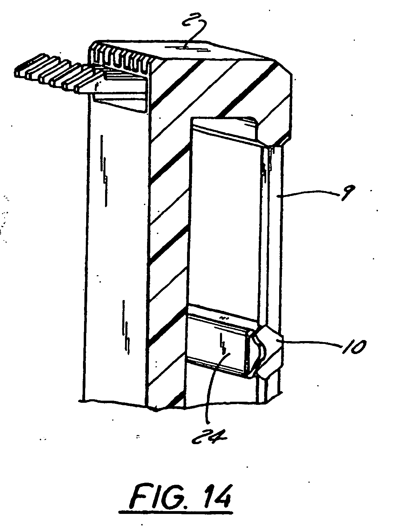

- Fig. 14: eine perspektivische, vergrößerte Schnittansicht einer Gehäusehalbschale mit Dichtung,

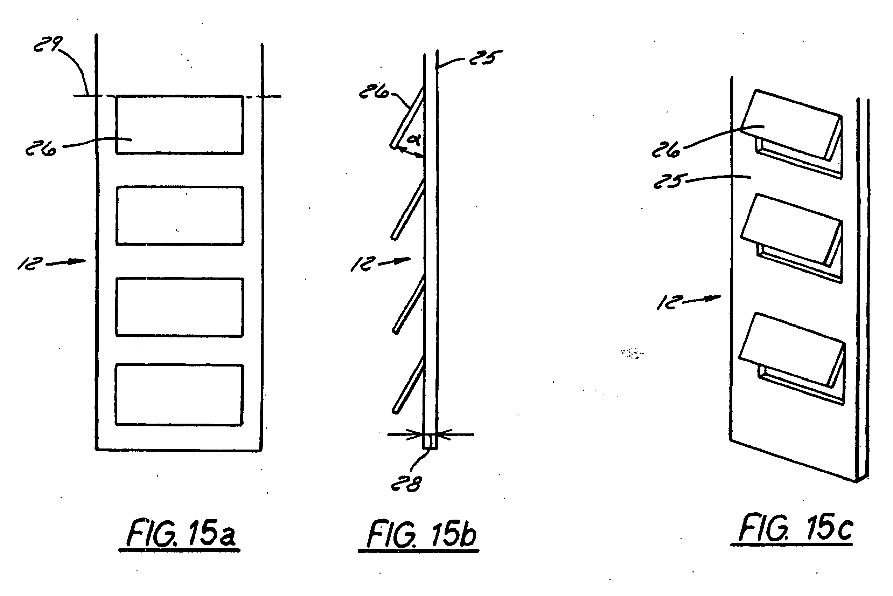

- Fig. 15a,: Fig. 15b und Fig. 15c verschiedene Ansichten eines erfindungsgemäßen Federelementes,
- Fig. 16a: eine Ansicht eines Wellrippenelements mit einem an diesem befestigten Kontaktblech und
- Fig. 16b: eine Ansicht eines weiteren Federelementes, das u.a. in der Ausführungsform der Erfindung gemäß Fig. 8 einsetzbar ist.

Im Gegensatz zu herkömmlichen elektrischen Heizvorrichtungen für den Einsatz in Kraftfahrzeugen ist die erfindungsgemäße Heizvorrichtung aus zwei KunststoffHalbschalen aufgebaut. Bei der Fertigung lässt sich zunächst in einfacher Weise eine Gehäusehälfte bestücken und anschließend wird das Gehäuse durch Aufsetzen der zweiten Gehäusehälfte vervollständigt.

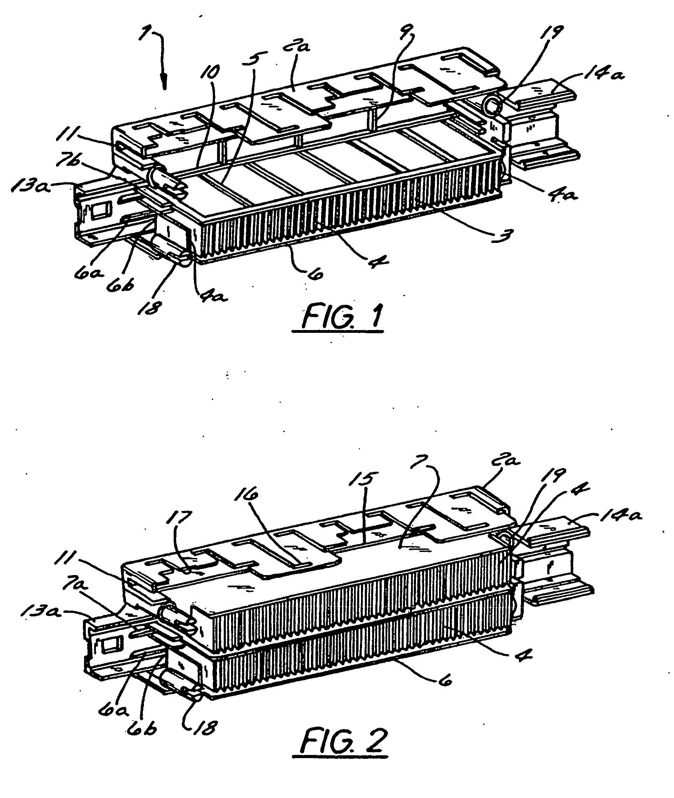

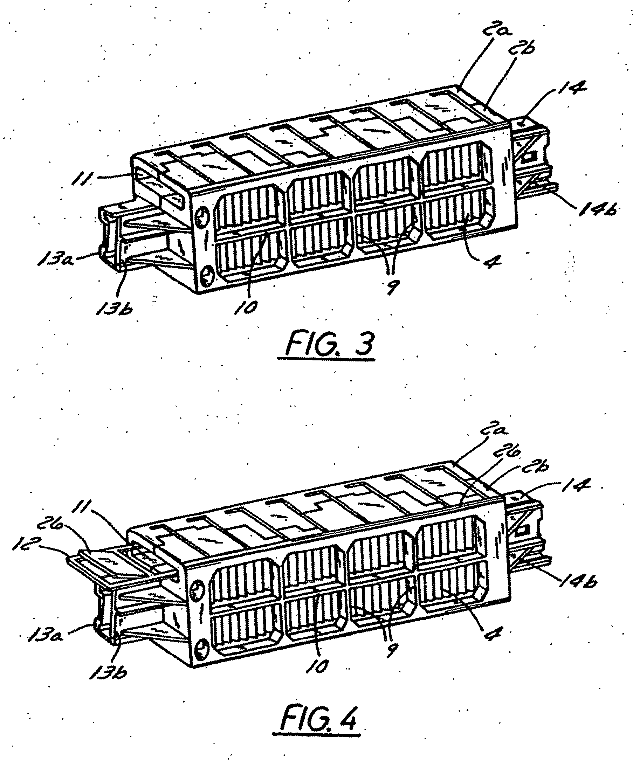

Fig. 1 bis Fig. 4 zeigen aufeinander folgende Stufen des Zusammenbaus der erfindungsgemäßen Heizvorrichtung, die den Aufbau der erfindungsgemäßen Heizvorrichtung verdeutlichen. Fig. 1 zeigt eine perspektivische Ansicht einer Halbschale 2a der Halbschalen 2a, 2b des Gehäuses. In die Halbschale 2a sind ein Kontaktblech 6, eine Radiatorelement 4 und benachbart dazu PTC-Heizelemente 3 eingesetzt. Zur Erleichterung des Zusammenbaus sind jeweils Führungsschienen bzw. Positioniermittel für alle Bestandteile vorgesehen. Insbesondere wird die Position der Kontaktplatte 6 mit dem Kontaktstift 6a beim Einsetzen über die Führung 6b (bzw. 7b für die Kontaktplatte 7 in Fig. 2) definiert. Die Radiatorelemente 4 sind vorzugsweise in Form von Wellrippenelementen ausgebildet. Auf einer Seite ist das Wellrippenelement mit einer Kontaktplatte versehen. Für die Enden der Kontaktplatte des Wellrippenelementes 4 sind seitlich in der Innenseite des Gehäuses Führungen 4a vorgesehen. Diese Führungen dienen allein der Erleichterung der Montage. In einer alternativen Ausführungsform kann auf sie daher auch verzichtet werden.

Um die PTC-Heizelemente 3 auch im eingebauten Zustand gegeneinander zu isolieren, sind Positionierungsmittel 5 in einer Halbschale des Gehäuses vorgesehen, die die PTC-Heizelemente 3 beabstandet zueinander halten. Diese Positionierungsmittel 5 sind vorzugsweise an einer Längsstrebe 10 an den seitlichen Gehäusestirnseiten befestigt. Diese Streben werden nachfolgend ausführlich dargestellt.

Wie in Fig. 2 dargestellt, sind oberhalb der PTC-Heizelemente 3 wiederum ein Radiatorelement 4 und eine Kontaktplatte 7 mit einem Steckkontakt 7a vorgesehen - entsprechend zu dem in Fig. 1 gezeigten Aufbau. Auf die so bestückte erste Halbschale 2a ist die zweite Gehäusehalbschale 2b aufsteckbar. Beide Gehäusehalbschalen sind vorzugsweise so ausgebildet, dass ihre Trennlinie etwa in der Mitte zwischen den beiden länglichen Gehäusestirnseiten (die die Durchlaßöffnungen aufweisen) verläuft.

Das Zusammensetzen des Gehäuses kann besonders dadurch vereinfacht werden, dass beide Halbschalen 2a, 2b mit Rastzapfen 18 und entsprechenden Bohrungen in der jeweils gegenüber liegenden Halbschale versehen sind. Beim Zusammenstecken verrasten beide Halbschalen, sobald die zweite Halbschale 2b vollständig auf die erste Halbschale 2a aufgesteckt ist.

Das zusammengesetzte Gehäuse der elektrischen Heizvorrichtung ist in Fig. 3 wiedergegeben. In Fig. 3 ist zu erkennen, dass jede der Gehäusehälften 2a, 2b an den länglichen Stirnseiten Öffnungen für die durchströmende Luft aufweist.

Um die Effizienz der Wärmeerzeugung durch die PTC-Heizelemente zu erhöhen, werden diese in dem in Zusammenhang mit Fig. 1 und Fig. 2 beschriebenen geschichteten Aufbau innerhalb des Gehäuses geklemmt gehalten. Diese Klemmung wird von einem zusätzlichen Federelement 12 bewirkt. Vorzugsweise wird das Federelement wenigstens zwischen einer Gehäuseinnenseite und dem geschichteten Aufbau eingeschoben. Zusätzlich kann ein solches Federelement auch zwischen der gegenüberliegenden Gehäuseinnenseite und dem geschichteten Aufbau oder an einer Stelle innerhalb des geschichteten Aufbaus eingeschoben werden.

Damit das Gehäuse in der Lage ist, die Klemmkräfte ohne Verformung des Gehäuses aufzunehmen, sind die länglichen Gehäusestirnseiten mechanisch verstärkt ausgebildet. Zwischen den mechanisch verstärkten Gehäusestirnseiten, insbesondere im Bereich der Trennlinie, ist das Gehäuse nicht in der Lage, hohe Klemmkräfte aufnehmen.

Um besonders hohe Klemmkräfte aufnehmen zu können, sind innerhalb der seitlichen Öffnung für die zu erwärmende Luft Querverstrebungen 9 vorgesehen. Diese Querverstrebungen ermöglichen, dass das Gehäuse ausreichend hohe Klemmkräfte ohne eine Durchbiegung oder Verformung des Gehäuses aufnehmen kann. Die Halbschalen mit den Verstrebungen sind jeweils einstückig ausgebildet und vorzugsweise aus Kunststoff hergestellt.

In einer besonders vorteilhaften Ausführungsform werden die Querverstrebungen 9 durch eine oder mehrere Längsstreben 10 ergänzt, so dass die Verstrebungen 9 und 10 die Form einer Gitterstruktur aufweisen. Eine solche Gitterstruktur ermöglicht, dass die Querverstrebungen 9 besonders dünn gehalten werden können und den Luftdurchsatz nicht behindern. Gleichzeitig wird wirkungsvoll ein Aufbiegen des Gehäuses verhindert.

Die Stabilität des Gehäuses zwischen den mechanisch verstärkten Gehäusestirnseiten ist in einer vorteilhaften Ausführungsform durch eine besondere Gestaltung der oberen und unteren Seiten der Halbschalen verstärkt. Zu diesem Zweck sind auf der Gehäuseober- und -unterseite jeder Halbschale 2a, 2b jeweils Vorsprünge 16 und Vertiefungen 17 vorgesehen, die so angeordnet sind, dass sie beim Zusammenstecken ineinander greifen. Auf diese Weise wird die mechanische Stabilität der Ober- und Unterseiten auch zwischen den mechanisch verstärkten länglichen Gehäusestirnseiten erhöht.

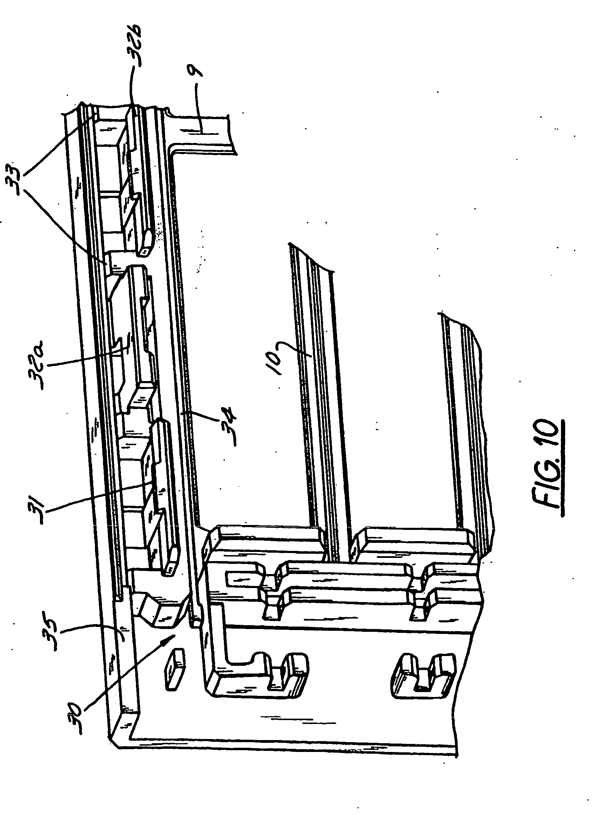

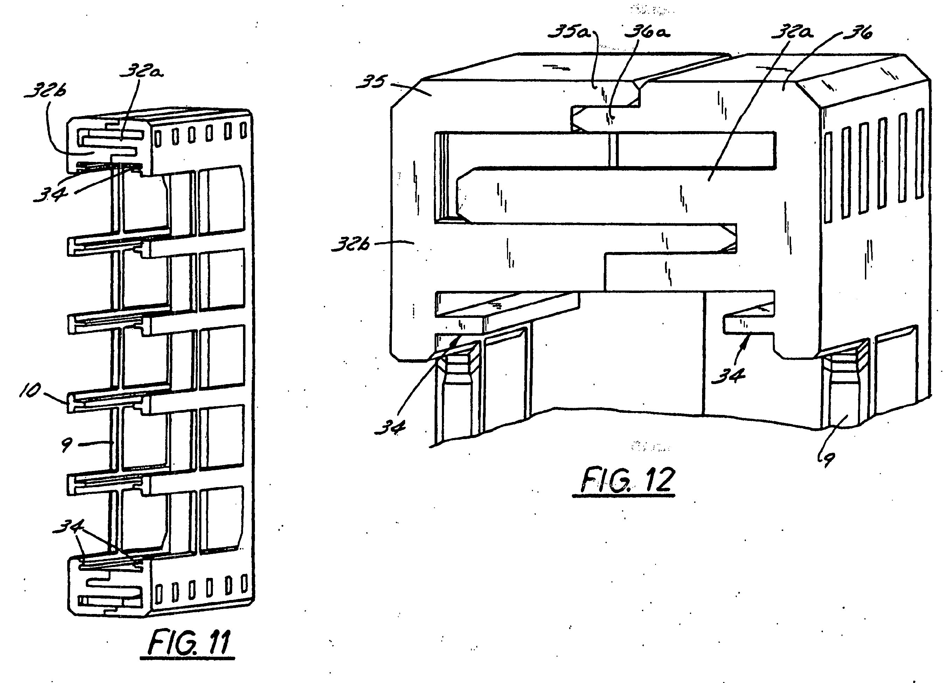

Da das Gehäuse erst nach dem Zusammenbau in der Lage ist, hohe Klemmkräfte ohne Verformung des Gehäuses aufzunehmen, kann das Federelement 12 erst nach dem Zusammenbau des Gehäuses eingesetzt werden. Zu diesem Zweck weist das Gehäuse 2 an einer Gehäuseseite eine Öffnung 11 auf. Eine solche Öffnung ist vorzugsweise an den Schmalseiten des Gehäuses 2 vorgesehen. Jede Gehäusehälfte 2a, 2b besitzt entsprechende Ausnehmungen, die sich bei dem zusammengesetzten Gehäuse 2 zum Schlitz 11 zum Einsetzen des Federelementes 12 ergänzen. Eine besondere Ausgestaltung der Gehäuseinnenseiten zur Bildung eines Federkanals zum Einschieben des Federelementes 12 ist nachfolgend unter Bezugnahme auf die Figuren 10 bis 12 beschrieben.

Die in dem Gehäuse vorgesehenen Positionierungsmittel 4a, 5, 6b, 7b sind so angeordnet, dass die vorpositionierten Elemente der Heizvorrichtung ausreichend Platz für das Federelement lassen. Insbesondere sind die vorpositionierten Elemente in der durch die Feder bewirkten Klemmrichtung mit Spiel fixiert, um sie beweglich zu halten und den von der Feder erzeugten Klemmdruck aufzunehmen.

In Fig. 4 ist zu erkennen, dass das Federelement 12 eine Vielzahl einzelner Federsegmente aufweist, die den Klemmdruck erzeugen. Auf bevorzugte Ausführungsformen des Federelementes 12 wird nachfolgend in Zusammenhang mit den Figuren 10a, 10b und 10c eingegangen.

In den dargestellten Ausführungsformen sind die Kontaktplatten 6 und 7 jeweils außen in dem geschichteten Aufbau angeordnet, so dass die Stromzuführung über die Radiatorelemente 4 zu den PTC-Heizelementen 3 erfolgt. Dieser Aufbau führt zu einem besonders guten Wärmeübergang zwischen den PTC-Heizelementen 3 und den Radiatorelementen 4, die die Wärme an die durchströmende Luft abgeben, und Wärmeleitungsverluste sind daher besonders gering.

Durch die Anordnung der Kontaktplatten am oberen und unteren Ende des geschichteten Aufbaus der Elemente der Heizvorrichtung wird der Luftdurchsatz besonders wenig behindert. Dadurch kann die Bauhöhe ohne Verminderung des Luftdurchlassvolumens klein gehalten werden.

Aufgrund der erfindungsgemäßen Gestaltung des Gehäuses mit mechanisch besonders stabil ausgeprägten länglichen Gehäusestirnseiten werden die Klemmkräfte nicht wie herkömmlich von den Seitenholmen des Halterahmens aufgenommen. Die Schmalseiten des Gehäuses können daher beliebig ausgebildet sein. Vorzugsweise sind die Gehäuseschmalseiten so gestaltet, dass sie eine mechanische Fixierung und eine elektrische Kontaktierung der Heizvorrichtung ermöglichen. Zur elektrischen Kontaktierung ist wenigstens eine Gehäuseschmalseite beliebig an die Geometrie eines Steckers zur Stromzuführung anpassbar.

Die Ausgestaltung der Schmalseiten ist exemplarisch in den Fig. 1 bis 4 dargestellt. Auf der linken Gehäuseseite wird eine Steckerform aus den jeweils an beiden Gehäusehälften angeformten Vorsprüngen 13a, 13b gebildet. In diesen Stecker ragen die Steckerzungen 6a und 7a der beiden Kontaktplatten 6, 7 hinein. Auf der gegenüberliegenden Seite wird ein Stecker 14 aus den Vorsprüngen 14a, 14b gebildet, der im Wesentlichen der mechanischen Befestigung der elektrischen Heizvorrichtung dient. Da die Schmalseiten des Gehäuses 2 keine hohen Kräfte aufzunehmen haben, können sie beliebig zur mechanischen und/oder elektrischen Befestigung gestaltet werden.

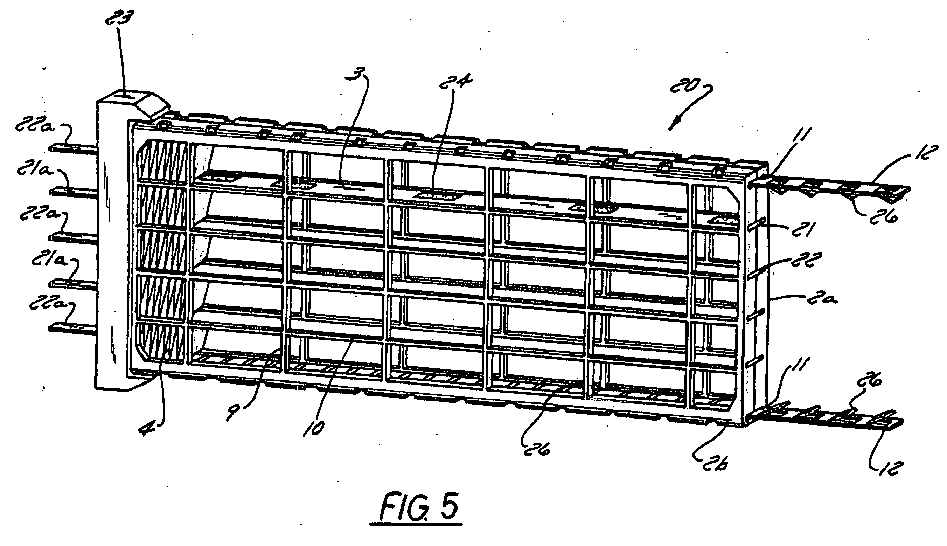

In den Figuren 5 bis 7 ist eine weitere Ausführungsform eines Gehäuses und einer entsprechenden elektrischen Heizvorrichtung dargestellt. Fig. 5 zeigt eine perspektivische Ansicht einer Ausführungsform einer elektrischen Heizvorrichtung 20, die gegenüber der Ausführungsform der Figuren 1 bis 4 schmaler, aber mit größerer Querschnittsfläche für einen höheren Luftdurchsatz ausgebildet ist. Dazu weist die Heizvorrichtung PTC-Heizelemente 3 in einer Mehrzahl von Ebenen in dem geschichteten Aufbau auf. Im Gegensatz zu Fig. 1 sind die PTC-Heizelemente 3, die eine rechteckige Form aufweisen, mit ihren Längsseiten parallel zu den länglichen Gehäusestirnseiten der Heizvorrichtung ausgerichtet.

Entsprechend zu jeder Schicht mit PTC-Heizelementen 3 in dem geschichteten Aufbau aus Radiatorelementen 4, PTC-Heizelementen 3 und Elektrodenblechen 21, 22 sind jeweils auf der Höhe der Schichten mit PTC-Heizetementen 3 Längsstreben 10 vorgesehen. In der dargestellten Ausführungsform sind insgesamt vier Schichten mit PTC-Heizelementen 3 vorhanden und dementsprechend auch vier Längsstreben vorgesehen. Aufgrund der größeren Längsausdehnung der Heizvorrichtung im Vergleich zur Heizvorrichtung der Figuren 1 bis 4 weist diese Ausführungsform auch eine größere Anzahl von Querstreben 9 auf.

Im Gegensatz zur ersten Ausführungsform werden bei der dargestellten Heizvorrichtung zwei Federelemente 12 verwendet, die jeweils am oberen und unteren Ende auf der Schmalseite des Gehäuses eingeschoben werden. Die Federn werden jeweils so eingeschoben, dass die Federsegmente 26, die aus dem Federelement 12 herausragen, von der Gehäuseoberfläche in Richtung des geschichteten Aufbau ragen. Obwohl nicht dargestellt, können auch weitere Federelemente 12 zwischen den dargestellten Positionen in den geschichteten Aufbau eingeschoben werden.

Aufgrund der Mehrzahl der in dieser Ausführungsform dargestellten Schichten mit PTC-Heizelementen 3 ist auch eine entsprechend höhere Anzahl von Kontaktblechen erforderlich. Das oberste und unterste der Kontaktbleche 22 sind jeweils benachbart zur oberen bzw. unteren Gehäuseinnenseite angeordnet. Die drei mittleren Kontaktbleche sind jeweils benachbart zu den drei unteren Schichten mit PTC-Heizelementen angeordnet, d.h. entsprechend zu den drei unteren der Längsstreben 10.

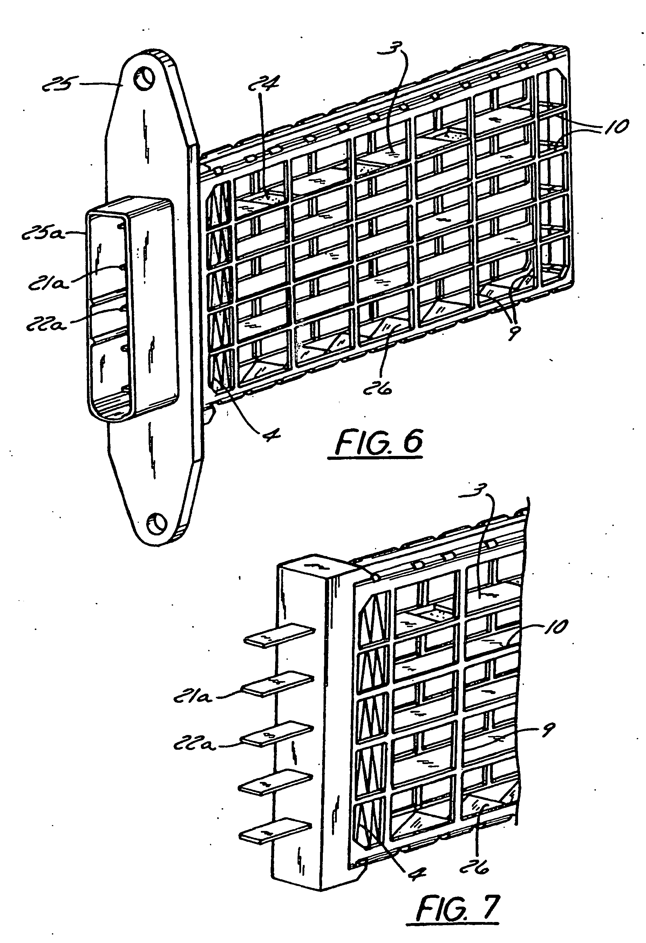

Jedes der Kontaktbleche 21, 22 besitzt aus dem Rahmen herausragende Kontaktzungen 21a, 22a. Die Gehäuseseite 23, aus der die Kontaktzungen 21a, 22a herausragen, kann beliebig ausgestaltet sein. Eine besondere Ausführungsform ist in Fig. 6 gezeigt. Auf das in Fig. 5 gezeigte Gehäuse 23 ist jeweils ein individuell angepasste Steckerform 25 aufgesteckt oder aufgeklebt. Diese aufgeklebte Steckerform kann an die jeweiligen Bedürfnisse angepasst sein, beispielsweise zum Einbau der Heizvorrichtung in Fahrzeuge verschiedener Kfz-Hersteller, die verschiedene Typen von Steckkontakten verwenden. Bei dem in Fig. 6 dargestellten Ausführungsbeispiel besteht der aufsteckbare Steckeraufsatz 25 aus einem mechanischen Anschlag mit Befestigungslöchern und einem Steckerschuh 25a, in dem die Kontaktzungen 21 a, 22a angeordnet sind.

Gemäß einer weiteren, besonderen Ausführungsform wird das Gehäuse seitlich mit Hilfe von Silikondichtungen abgedichtet. Die Silikondichtungen 24 sind vorzugsweise auf den Längsstreben angeordnet, wie in den Figuren 5 bis 7 und 11, 12 dargestellt. Die Silikondichtungen 24 sind dabei auf den Längsstreben angeordnet, d.h. jeweils genau auf der Höhe der PTC-Heizelemente 3.

Zur Vereinfachung der Montage beim Einlegen der Dichtungen weisen die Silikondichtungen 24 die Form der Gitterstruktur der Verstrebungen auf. Auf diese Weise wird die Fertigung deutlich vereinfacht, da die Dichtungen für die Längsstreben nicht einzeln einzusetzen sind, sondern in einem Schritt als ganzes eingelegt werden können.

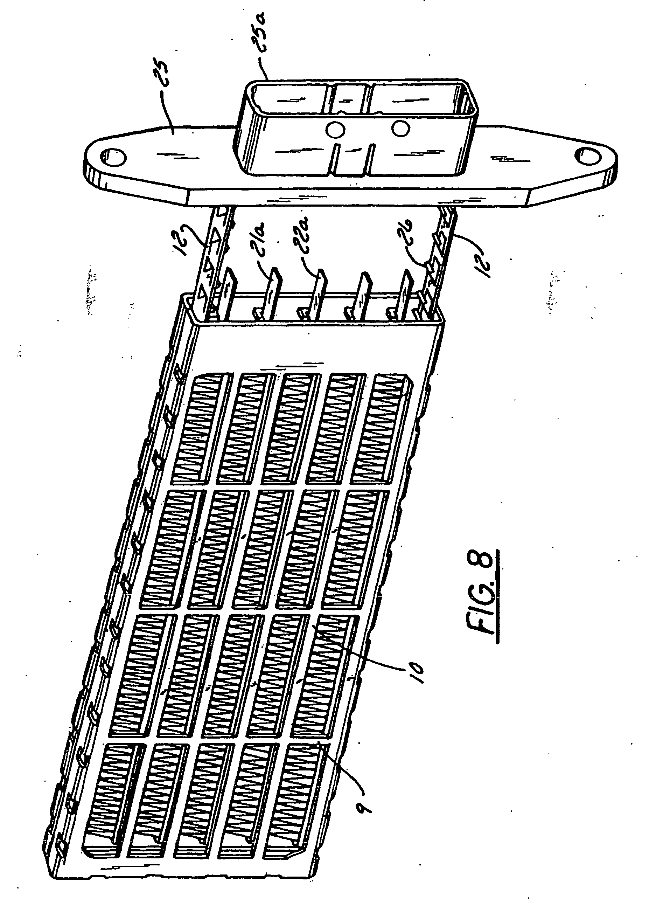

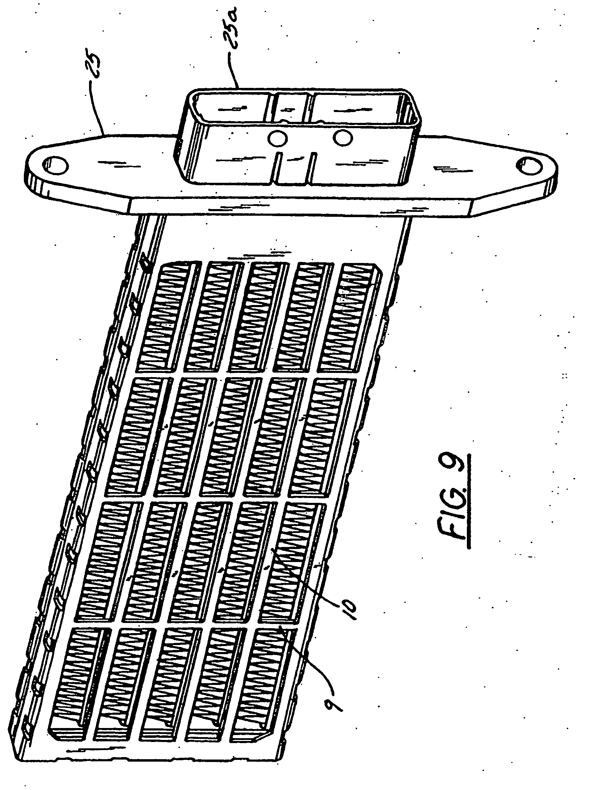

In den Figuren 8 und 9 sind perspektivische Ansichten einer weiteren Ausführungsform wiedergegeben. Diese Ausführungsform unterscheidet sich von der in den Figuren 6 und 7 dargestellten Ausführungsform insbesondere durch die Anzahl der Querstreben. In dieser Ausführungsform sind weniger, aber dafür stabilere Querstreben verwendet.

Vorzugsweise werden Querstreben in einem Abstand von 30 bis 40 mm angeordnet. Bei einem Abstand der Querstreben, der größer als 40 mm ist, insbesondere ab etwa 60 mm Abstand, können die Klemmkräfte nicht mehr in ausreichendem Maße von den Querstreben aufgenommen werden. Unterhalb von einem Abstand der Querstreben von weniger als 30 mm, insbesondere weniger als 20 mm, behindert dagegen deutlich den Luftdurchsatz durch die länglichen Stirnseiten der Heizvorrichtung.

Die Figuren 10 bis 12 zeigen eine besondere Ausführungsform zur Ausgestaltung der Innenseiten der beiden Gehäusehalbschalen. Die innere Struktur der Gehäusehalbschalen weist einen Federkanal auf, in den die Feder 12 nach dem Zusammensetzen beider Halbschalen des Gehäuses einsetzbar ist. Der Federkanal bewirkt eine Führung der Feder beim Einsetzen, und zwar über jeweils seitlich verlaufende Nuten. Die Nuten werden beispielsweise durch die Vorsprünge 34 und entweder die Gehäuseoberseite oder, wie in der dargestellten Ausführungsform, über Einrastlaschen 32a, 32b gebildet.

Der Vorsprung 34 bildet nicht nur eine Seite des Federkanals für das Einsetzen der Feder, sondern er dient ebenfalls als Positionierungshilfe der Elemente der Heizvorrichtung. Diese werden durch den Vorsprung 34 mit Spiel in dem Gehäuse (vor-) fixiert, um einen Einschubkanal für die nach dem Zusammensetzen einzuschiebende Feder.

Die in den Figuren 10 bis 12 dargestellte Ausführungsform weist außerdem eine erhöhte Steifigkeit auf. Eine solche zusätzliche Versteifung kann unter anderem aus folgenden Gründen erforderlich werden. Um auch bei "Großflächenheizvorrichtungen", d.h. Heizvorrichtungen, die schmal aber mit großer Fläche für einen hohen Luftdurchsatz ausgebildet sind, eine hohe Effektivität zu erreichen, sind sehr hohe Klemmkräfte erforderlich. Bei Gehäusetemperaturen von in etwa 170 Grad Celsius läßt jedoch die Steifigkeit des verwendeten Kunststoffs nach. Außerdem können die Federn die Kraft nicht nur auf den Rand des Gehäuses übertragen, da die verwendeten Federsegmente einen Abstand von minimal ca. 2 mm bis 2,5 mm zum Rand der Feder aufweisen. Um dennoch eine Durchbiegung der oberen und unteren Gehäuseseiten zu vermeiden, sind diese vorzugsweise zusätzlich versteift. Dazu sind in beiden Gehäusehalbschalen jeweils gegenüberliegend angeordnete Einrastlaschen 32a, 32b vorgesehen. Die Einrastlaschen ragen jeweils in Richtung der gegenüberliegenden Gehäusehälfte und werden über Rastnasen 31 beim Zusammensetzen miteinander verrastet. Durch diese Verzahnung an den oberen und unteren Gehäuseseiten wird deren mechanische Steifigkeit erhöht und eine Durchbiegen verhindert.

Eine weitere Erhöhung der Steifigkeit kann über eine zusätzliche Seitenwand 35, 36 erreicht werde. Diese Seitenwand 35,36 ist jeweils oberhalb der bisherigen Seitenwände angeordnet und über Stützelemente 33 mit dieser verbunden. Auf diese Wiese kann die mechanische Steifigkeit der Ober- und Unterseiten so erhöht werden, dass das Gehäuse besonders hohe Klemmkräfte aufnehmen kann. Dadurch ist eine "Großflächenbauweise" möglich, also eine Heizvorrichtung mit einer Vielzahl von übereinander geschichteten Lagen von PTC-Elementen und dazwischen liegenden Radiatorelementen.

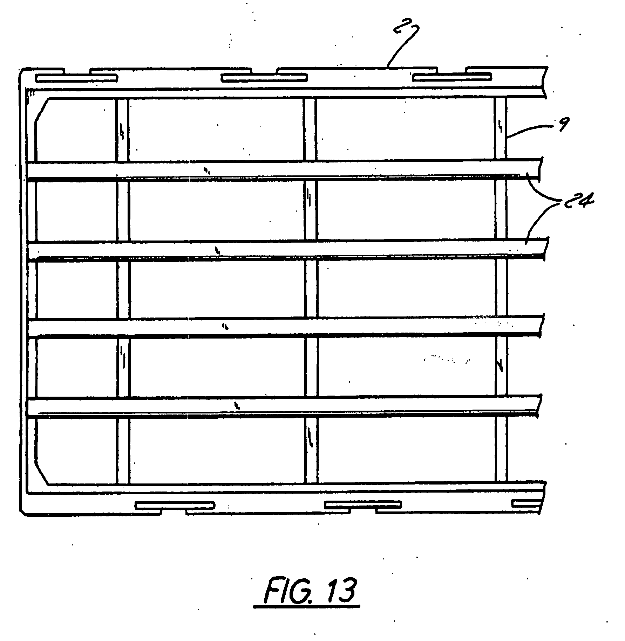

Der Aufbau des Federelementes 12 wird nachfolgend unter Bezugnahme auf Fig. 13a, Fig. 13b und Fig. 13c beschrieben. In Fig. 13a ist eine Aufsicht auf das Federelement 12, in Fig. 13b eine Seitenansicht und in Fig. 13c eine perspektivische Ansicht des Federelementes 12 wiedergegeben.

Das Federelement 12 besteht aus einem Blechteil 25 und aus diesem herausragenden Federsegmenten 26. Vorzugsweise ist das Federelement 12 einstückig ausgebildet, wobei die Federsegmente jeweils an drei Seiten aus dem Blechteil 25 ausgestanzt und um eine Achse 29 in Querrichtung des Blechteils 25 gebogen sind. Der Winkel a, um den die ausgestanzten Segmente herausgebogen sind, liegt in etwa zwischen 5° und 30°, vorzugsweise zwischen 15° und 20°. Durch diesen Aufbau des Federelementes 12 ist keine Durchbiegung in Querrichtung möglich, sondern nur in Längsrichtung. Dadurch wirkt das Federelement nur auf den Gehäuserand, an dem es sich bei der Erzeugung der Klemmkraft abstützt. Damit wirkt die Feder ideal mit dem Gehäuse zusammen, das aufgrund seines Aufbaus nur in den Gehäuseseiten größere Kräfte aufnehmen kann und in der Mitte, im Bereich der Trennlinie, weniger belastbar ist. Vorzugsweise sind die seitlichen Enden der Federsegmente dazu sehr nah am Rand des Federelementes angeordnet.

Die Darstellung in den Figuren 13a, 13b und 13c ist lediglich schematisch. Die Federsegmente 26 müssen nicht rechteckig ausgebildet sein, sondern können auch Bereiche unterschiedlicher Breite und Neigung umfassen. So kann jedes Federsegment beispielsweise einen breiter ausgebildeten Endabschnitt besitzen, der leicht abgeflacht ist, um ein besseres Einschieben des Federelements in das Gehäuse zu ermöglichen.

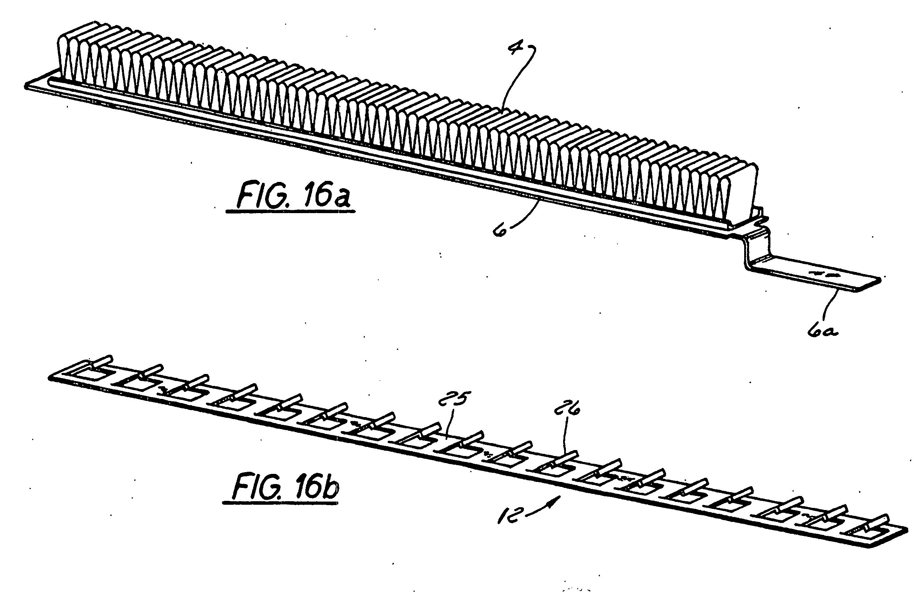

In Fig. 16a ist ein Radiatorelement 4 und ein mit diesem verbundenes Kontaktblech 6 in einer länglichen Ausführungsform für eine "Großflächenheizvorrichtung" (bspw. gemäß Fig. 9) dargestellt. Das dazu entsprechende Federelement ist in Fig. 16b gezeigt. Das Federelement weist eine Vielzahl von hintereinander angeordneten Federsegmenten 26 auf. Jedes der Federsegmente 26 ist in der Lage, eine Andruckkraft von ca. 15 N auszuüben. Zur Erhöhung der Andruckkraft werden die Federsegmente gemäß Fig. 16b dicht hintereinander positioniert, so dass über der Fläche eines PTC-Elementes zwei oder drei Federsegmente 26 angeordnet sind. Dadurch kann der Klemmdruck verdoppelt oder sogar verdreifacht werden. Dabei wird der Klemmdruck im Gegensatz zu herkömmlichen Rahmenhalterungen gleichmäßig über die gesamte Länge der Feder ausgeübt.

Damit die von den Federsegmenten 26 erzeugten Klemmkräfte vom Gehäuse aufgenommen werden können, sind die länglichen Gehäusestirnseiten so mit Querverstrebungen 9 ausgestattet, dass zwischen zwei aufeinanderfolgenden Querstreben 9 zwei bis maximal fünf Federsegmente 26 angeordnet sind.

Die Ausführungsform gemäß Fig. 4 zeigt ein Federelement 12 mit zwei oder mehr nebeneinander angeordneten Federsegmenten. Diese Ausführungsform ist vorteilhaft bei Gehäuseformen, die eine große Tiefe aufweisen.

Während herkömmlicherweise Federn mit einer Dicke von ca. 0,8 mm eingesetzt werden, können bei dem neuen Bauprinzip Federelemente mit einer Dicke von 0,2 bis 0,5 mm, vorzugsweise etwa 0,3 mm eingesetzt werden. Dadurch läßt sich eine Federwirkung der Federsegmente 26 auch schon bei geringer Länge eines Federsegmentes erreichen.

Ein besonderer Vorteil der erfindungsgemäßen Heizvorrichtung ist, dass das Federelement erstmals als Endlosteil herstellbar ist und so von einer Rolle während der Fertigung zugeführt werden kann. Herkömmlich wird jedes Federsegment separat gefertigt und für alle unterschiedlichen Heizvorrichtungslängen individuell hergestellt. Zudem ist es ausreichend, nur ein Federelement pro Heizvorrichtung vorzusehen.

Neben der niedrigen Bauhöhe ist ein besonderer Vorteil der erfindungsgemäßen Heizvorrichtung, dass diese in besonders einfacher Weise herstellbar ist. Der Zusammenbau der Heizvorrichtung erfolgt wie in Zusammenhang mit den Figuren 1 bis 4 beschrieben. Erfindungsgemäß erfolgt der Zusammenbau der einzelnen Elemente im Gegensatz zu herkömmlichen Heizvorrichtungen ohne dass die Klemmkräfte auf den geschichteten Aufbau einwirken. Erst nach Zusammenbau des Gehäuses wird die Feder in das zusammengesetzte Gehäuse eingeschoben (vgl. Fig. 4).

Zusammenfassend betrifft die Erfindung ein neues Bauprinzip für elektrische Heizvorrichtungen, bei denen die Funktionen von Rahmen und Feder voneinander getrennt sind. Als Rahmen für eine elektrische Heizvorrichtung wird ein Gehäuse verwendet, das aus zwei Halbschalen besteht. In dem Gehäuse sind Positionierungshilfen für die PTC-Heizelemente angeordnet. Die Längsseiten des Gehäuses sind im Wesentlichen offen ausgebildet, um einen Luftdurchsatz durch das Heizregister zu ermöglichen. Zusätzlich ist in das Gehäuse eine Feder eingebracht, die den geschichteten Aufbau aus Radiatorelementen, PTC-Heizelementen und Kontaktblechen zusammenpresst. Die Feder kann durch eine seitlich in dem Gehäuse vorgesehene Öffnung nachträglich in das Gehäuse eingeschoben werden. Dadurch wird das Gehäuse erst nach dem Zusammensetzen, wenn es mechanisch belastbar ist, den Federkräften ausgesetzt.

Das neue Bauprinzip besitzt eine Mehrzahl von Vorteilen. Zum einen kann mit der erfindungsgemäßen Bauweise das Gewicht bei gleicher Heizleistung deutlich verringert werden, da kein Metallrahmen verwendet wird, und zwar bis zu etwa 50 Prozent. Außerdem weist die Heizvorrichtung ohne Zusatzmaßnamen und ohne zusätzliches Gewicht keine freiliegenden Metalloberflächen auf. Ein weiterer Vorteil ist die niedrige Bauhöhe, die um bis zu 30 Prozent unter der herkömmlicher Heizvorrichtungen liegt. Dadurch sind auch sehr viel kleinere Heizungen als herkömmlich realisierbar, die dennoch einen hohen Wirkungsgrad aufgrund des verwendeten Klemmprinzips für die Erhöhung der elektrischen und thermischen Kontaktierung erreichen. Zudem sind auch längere Heizelemente herstellbar, die mit der herkömmlichen Halterahmen-Bauweise nur mit hohem Aufwand realisierbar sind.

Zudem wird kein herkömmlicher Positionsrahmen zur Beabstandung und zum Schutz der PTC-Heizelemente verwendet, sondern die PTC-Heizelemente werden direkt über Gehäusevorsprünge voneinander getrennt.

Außerdem wird der Herstellungsaufwand gegenüber herkömmlichen Heizvorrichtungen deutlich verringert. Die Fertigung der erfindungsgemäßen Heizvorrichtung ist sehr viel einfacher, da keine spezielle Vorrichtung zur Überwindung der Federkräfte des Rahmens während des Herstellungsvorgangs erforderlich ist.

Das Bauprinzip erfordert keine spezielle Gestaltung der Seitenholme eines Halterahmens, um die auf die Längsholme wirkende Klemmkraft aufzunehmen. Die Schmalseiten des erfindungsgemäßen Gehäuses sind daher in ihrer Gestaltung an jede gewünschte Steckergeometrie anpassbar, die die aus dem Gehäuse ragenden Steckerzungen der Kontaktbleche umgibt.

Zudem ist auf diese Weise die Feder deutlich günstiger herstellbar. Zum einen kann die Dicke der Feder reduziert werden und damit eine Materialeinsparung erreicht werden. Zum anderen kann das Federelement jetzt erstmals als Endlosteil hergestellt und von einer Rolle bei der Fertigung zugeführt werden. Außerdem ist ein einziges Federelement ausreichend.

## Patentansprüche

1. Elektrische Heizvorrichtung, insbesondere als Zusatzheizung für Kraftfahrzeuge, mit einem Gehäuse (2), das an den länglichen Gehäusestirnseiten offen ausgebildet ist, und einem geschichteten Aufbau aus wenigstens einem PTC-Heizelement (3), einem Radiatorelement (4), Kontaktblechen (5,6) zur Stromzuführung und einem Federelement (12), wobei der geschichtete Aufbau durch das Federelement (12) in dem Gehäuse (2) geklemmt gehalten ist,
**gekennzeichnet durch**
eine seitlich in dem Gehäuse (2) vorgesehene Öffnung (11) zum Einschieben des Federelementes (12), **durch** welche der geschichtete Aufbau zwischen gegenüberliegenden Gehäuseseiten unter Vorspannung gehalten ist.

2. Elektrische Heizvorrichtung nach Anspruch 1, **gekennzeichnet durch** einen in dem Gehäuse (2) ausgebildeten Federkanal zur Aufnahme des Federelementes (12).

3. Elektrische Heizvorrichtung nach Anspruch 1 oder 2, **gekennzeichnet durch** Positionierungsmittel (34) zum Vorfixieren der Elemente der Heizvorrichtung in dem Gehäuse (2).

4. Elektrische Heizvorrichtung nach Anspruch 3, **dadurch gekennzeichnet, dass** die Positionierungsmittel (34) in dem Gehäuse (2) gleichzeitig eine Nut zur Führung des Federelementes (12) beim Einschieben bilden.

5. Elektrische Heizvorrichtung nach einem der Ansprüche 1 bis 4, **dadurch gekennzeichnet, dass** die länglichen Gehäusestirnseiten durch wenigstens eine Querverstrebung (9) mechanisch verstärkt sind.

6. Elektrische Heizvorrichtung nach Anspruch 5, **dadurch gekennzeichnet, dass** die Verstrebungen (9,10) in den länglichen Gehäusestirnseiten die Form einer Gitterstruktur aufweisen.

7. Elektrische Heizvorrichtung nach Anspruch 5 oder 6, **dadurch gekennzeichnet, dass** die Gitterstruktur wenigstens eine Längsverstrebung (10) im Bereich der PTC-Heizelemente (3) aufweist.

8. Elektrische Heizvorrichtung nach einem der Ansprüche 1 bis 7, **dadurch gekennzeichnet, dass** das Gehäuse (2) aus Kunststoff hergestellt ist.

9. Elektrische Heizvorrichtung nach einem der Ansprüche 1 bis 8, **dadurch gekennzeichnet, dass** das Gehäuse (2) Positionierungsmittel (5) aufweist, um die PTC-Heizelemente (3) auf gegenseitigem Abstand zu halten.

10. Elektrische Heizvorrichtung nach einem der Ansprüche 1 bis 9, **dadurch gekennzeichnet, dass** das Gehäuse (2) zwei Halbschalen (2a,2b) umfaßt.

11. Elektrische Heizvorrichtung nach Anspruch 10, **dadurch gekennzeichnet, dass** die Halbschalen (2a,2b) des Gehäuses (2) zusammensteckbar sind.

12. Elektrische Heizvorrichtung nach Anspruch 11, **gekennzeichnet durch** Rastzapfen (18) oder Rastnasen (31), die beim Zusammenstecken der Halbschalen (2a,2b) des Gehäuses (2) ein Verrasten beider Halbschalen (2a,2b) bewirken.

13. Elektrische Heizvorrichtung nach einem der Ansprüche 10 bis 12, **dadurch gekennzeichnet, dass** die Halbschalen (2a,2b) so ausgebildet sind, dass sie das Gehäuse (2) in etwa mittig zwischen den länglichen Gehäusestirnseiten trennen.

14. Elektrische Heizvorrichtung nach Anspruch 13, **gekennzeichnet durch** jeweils gegenüberliegende Vorsprünge (16, 17; 32a, 32b) an der Trennlinie der Halbschalen (2a,2b), die beim Zusammensetzen der Halbschalen (2a,2b) ineinander greifen.

15. Elektrische Heizvorrichtung nach einem der Ansprüche 1 bis 14, **dadurch gekennzeichnet, dass** das Federelement (12) aus einem Blechteil (25) mit aus diesem herausragenden Federsegmenten (26) besteht.

16. Elektrische Heizvorrichtung nach Anspruch 15, **dadurch gekennzeichnet, dass** die Federsegmente (26) jeweils bis in die Randbereiche der Längsseiten des Federelementes (12) reichen.

17. Elektrische Heizvorrichtung nach Anspruch 16, **dadurch gekennzeichnet, dass** das Federelement (12) mit den Federsegmenten (26) einstückig ausgebildet ist.

18. Elektrische Heizvorrichtung nach einem der Ansprüche 15 bis 17, **dadurch gekennzeichnet, dass** wenigstens ein Federsegment (26) zur Erzeugung von Klemmkräften an jeder PTC-Heizelement-Postion für eine kraftschlüssige Klemmung vorgesehen ist.

19. Elektrische Heizvorrichtung nach Anspruch 18, **dadurch gekennzeichnet, dass** für jede PTC-Heizelement-Position wenigstens zwei Federsegmente (26) vorgesehen sind.

20. Elektrische Heizvorrichtung nach einem der Ansprüche 1 bis 19, **gekennzeichnet durch** wenigstens eine Dichtung (24) zum Abdichten der Längsstreben (10) gegenüber den PTC-Heizelementen (3).

21. Elektrische Heizvorrichtung nach Anspruch 20, **durch gekennzeichnet,** dass die Dichtung (24) die gesamte Gitterstruktur (9,10) abdichtet.

22. Elektrische Heizvorrichtung nach Anspruch 21, **dadurch gekennzeichnet, dass** die Dichtung (24) für eine Gehäuseseite jeweils einstückig ausgebildet ist.

23. Gehäuse für eine elektrische Heizvorrichtung, insbesondere als Zusatzheizung für Kraftfahrzeuge, zur Aufnahme eines geschichteten Aufbaus aus wenigstens einem PTC-Heizelement (3), einem Radiatorelement (4), Kontaktblechen (5,6) zur Stromzuführung und einem Federelement (12), wobei das Gehäuse (2) derart ausgebildet ist, dass die von dem Federelement (12) erzeugten Kräfte von dem Gehäuse (2) aufgenommen werden können,
**dadurch gekennzeichnet,**
**dass** das Gehäuse eine seitliche Öffnung (11) zum Einschieben des Federelementes (12) aufweist.

24. Gehäuse nach Anspruch 23, **gekennzeichnet durch** einen in dem Gehäuse ausgebildeten Federkanal zum Einschieben des Federelementes (12).

25. Gehäuse nach Anspruch 23 oder 24, **gekennzeichnet durch** Positionierungsmittel (34) in dem Gehäuse zum Vorfixieren der Elemente der Heizvorrichtung.

26. Gehäuse nach Anspruch 25, **dadurch gekennzeichnet, dass** die Positionierungsmittel (34) in dem Gehäuse gleichzeitig eine Nut zur Führung des Federelementes (12) bilden.

27. Gehäuse nach einem der Ansprüche 23 bis 26, **dadurch gekennzeichnet, dass** die länglichen Gehäusestirnseiten durch wenigstens eine Querverstrebung (9) mechanisch verstärkt sind.

28. Gehäuse nach Anspruch 27, **dadurch gekennzeichnet, dass** die Verstrebungen (9,10) in den offenen ausgebildeten länglichen Gehäusestirnseiten die Form einer Gitterstruktur aufweisen.

29. Gehäuse nach Anspruch 27 oder 28, **dadurch gekennzeichnet, dass** das Gehäuse aus Kunststoff hergestellt ist.

30. Verfahren zur Herstellung einer elektrischen Heizvorrichtung (1), insbesondere als Zusatzheizung für Kraftfahrzeuge, mit einem Gehäuse (2) aus zwei Halbschalen (2a,2b), das an den länglichen Gehäusestirnseiten offen ausgebildet ist, und einem geschichteten Aufbau aus wenigstens einem PTC-Heizelement (3), einem Radiatorelement (4), Kontaktblechen (6,7) zur Stromzuführung und einem Federelement (12), wobei der geschichtete Aufbau durch das Federelement (12) in dem Gehäuse (2) geklemmt gehalten ist, mit den Montageschritten:
Einsetzen der Kontaktbleche (6,7), des Radiatorelementes (4) und des PTC-Heizelementes (3) in eine erste Halbschale (2a) des Gehäuses,
Aufstecken der zweiten Halbschale (2b) des Gehäuses (2) auf die erste Halbschale (2a) und
Einschieben des Federelementes (12) durch eine Öffnung (11) des zusammengesetzten Gehäuses (2), um eine von dem Gehäuse (2) widergelagerte und dem geschichteten Aufbau unter Vorspannung sitzende Klemmung des geschichteten Aufbaus zu bewirken.

## Claims

1. An electric heater, particularly as an auxiliary heating means for automotive vehicles, comprising a housing (2) which is made open on the elongate housing faces, and a layered structure of at least one PTC heating element (3), a radiator element (4), contact sheets (5, 6) for power supply and a resilient element (12), the layered structure being kept clamped in the housing (2) by the resilient element (12),
**characterized by**
an opening (11) provided laterally in the housing (2) for inserting the resilient element (12) keeping the layered structure biased between the opposite sides of the housing.

2. An electric heater according to claim 1, **characterized by** a resilient channel formed in the housing (2) for receiving the resilient element (12).

3. An electric heater according to claim 1 or 2, **characterized by** positioning means (34) for pre-fixing the elements of the heater in the housing (2).

4. An electric heater according to claim 3, **characterized in that** the positioning means (34) in the housing (2) simultaneously form a groove for guiding the resilient element (12) during insertion.

5. An electric heater according to any one of claims 1 to 4, **characterized in that** the elongate faces of the housing are mechanically reinforced by at least one transverse strut (9).

6. An electric heater according to claim 5, **characterized in that** the struts (8, 10) in the elongate faces of the housing have the shape of a grid structure.

7. An electric heater according to claim 5 or 6, **characterized in that** the grid structure has at least one longitudinal strut (10) in the area of the PTC heating elements (3).

8. An electric heater according to any one of claims 1 to 7, **characterized in that** said housing (2) is made from plastics.

9. An electric heater according to any one of claims 1 to 8, **characterized in that** the housing (2) comprises positioning means (5) for keeping the PTC heating elements (3) mutually spaced apart.

10. An electric heater according to any one of claims 1 to 9, **characterized in that** the housing (2) comprises two half-shells (2a, 2b).

11. An electric heater according to claim 10, **characterized in that** the half-shells (2a, 2b) of the housing (2) can be put together.

12. An electric heater according to claim 11, **characterized by** locking pins (18) or locking noses (31) which, when the half-shells (2a, 2b) of the housing (2) are put together, effect a locking of the two half-shells (2a, 2b).

13. An electric heater according to any one of claims 10 to 12, **characterized in that** the half-shells (2a, 2b) are configured such that they separate the housing (2) approximately in the middle between the elongate faces of the housing.

14. An electric heater according to claim 13, **characterized by** respectively opposite projections (16, 17; 32a, 32b) provided on the separation line of the half-shells (2a, 2b), which will engage each other when the half-shells (2a, 2b) are assembled.

15. An electric heater according to any one of claims 1 to 14, **characterized in that** the resilient element (12) consists of a sheet member (25) with resilient segments (26) projecting therefrom.

16. An electric heater according to claim 15, **characterized in that** each of the resilient segments (26) extends into the edge portions of the longitudinal sides of the resilient member (12).

17. An electric heater according to claim 16, **characterized in that** the resilient member (12) is made integral with the resilient segments (26).

18. An electric heater according to any of claims 15 to 17, **characterized in that** at least one resilient segment (26) for generating clamping forces is provided at each PTC heating element position for a frictional clamping action.

19. An electric heater according to claim 18, **characterized in that** at least two resilient segments (26) are provided for each PTC heating element position.

20. An electric heater according to any one of claims 1 to 19, **characterized by** at least one seal (24) for sealing the longitudinal struts (10) relative to the PTC heating elements (3).

21. An electric heater according to claim 20, **characterized in that** the seal (24) seals the whole grid structure (9, 10).

22. An electric heater according to claim 21, **characterized in that** the seal (24) for a housing side is respectively made integral.

23. A housing for an electric heater, particularly as an auxiliary heating means for automotive vehicles, for receiving a layered structure consisting of at least one PTC heating element (3), a radiator element (4), contact sheets (5, 6) for power supply and a resilient element (12), the housing being configured such that the forces from the resilient element (12) can be taken from the housing (2)
**characterized in that**
the housing has a lateral opening (11) for insertion of the resilient element (12).

24. A housing according to claim 23, **characterized by** a resilient channel formed in the housing for inserting the resilient element (12).

25. A housing according to claim 23 or 24, **characterized by** positioning means (34) in the housing for pre-fixing the elements of the heater.

26. A housing according to claim 25, **characterized in that** the positioning means (34) in the housing form a groove for guiding the resilient element (12) at the same time.

27. A housing according to any one of claims 23 to 26, **characterized in that** the elongate faces of the housing are mechanically reinforced by at least one transverse strut (9).

28. A housing according to claim 27, **characterized in that** the struts (9, 10) in the elongate faces of the housing having an open configuration are in the form of a grid structure.

29. A housing according to claim 27 or 28, **characterized in that** the housing is made from plastics.

30. A method for manufacturing an electric heater (1), particularly as an auxiliary heating means for automotive vehicles, comprising a housing (2) of two half-shells (2a, 2b) and made open on the elongate faces of the housing, and a layered structure consisting of at least one PTC heating element (3), a radiator element (4), contact sheets (6, 7) for power supply and a resilient element (12), the layered structure being kept clamped by the resilient element (12) in the housing (2), with the following mounting steps:
inserting the contact sheets (6, 7), the radiator element (4), and the PTC heating element (3) into a first half-shell (2a) of the housing,
attaching the second half-shell (2b) of the housing (2) to the first half-shell (2a), and
inserting the resilient element (12) through an opening (11) of the assembled housing (2) to effect a clamping of the layered structure, the clamping being abutted by the housing (2) and biasing the layered structure.

## Revendications

1. Dispositif de chauffage électrique, en particulier en tant que chauffage d'appoint pour des véhicules automobiles, avec un carter (2) ouvert sur les faces frontales allongées du carter, et une structure en couches, formée d'au moins un élément de chauffage à caractéristiques PTC (à coefficient de température positif) (3), d'un élément rayonnant (4), de tôles de contact (5, 6) pour l'alimentation électrique et d'un élément formant ressort (12), la structure en couche étant maintenue serrée dans le carter (2) au moyen de l'élément formant ressort (12),
**caractérisé par**
une ouverture (11) prévue latéralement dans le carter (2) pour l'insertion de l'élément formant ressort (12), par lequelle la structure à couches est maintenue sous précontrainte entre des faces de carter opposées.

2. Dispositif de chauffage électrique selon la revendication 1, **caractérisé par** un canal à ressort, réalisé à l'intérieur du carter (2), pour recevoir l'élément formant ressort (12).

3. Dispositif de chauffage électrique selon la revendication 1 ou 2, **caractérisé par** des moyens de positionnement (34) pour assurer la préfixation des éléments du dispositif de chauffage dans le carter (2).

4. Dispositif de chauffage électrique selon la revendication 3, **caractérisé en ce que** les moyens de positionnement (34) dans le carter (2) forment simultanément une rainure pour le guidage de l'élément formant ressort (12) lors de l'insertion.

5. Dispositif de chauffage électrique selon l'une des revendications 1 à 4, **caractérisé en ce que** les faces frontales allongées du carter sont renforcées mécaniquement par au moins un entretoisement transversal (9).

6. Dispositif de chauffage électrique selon la revendication 5, **caractérisé en ce que** les entretoisements (9, 10), réalisés dans les faces frontales allongées du carter, ont la forme d'une structure en grille.

7. Dispositif de chauffage électrique selon la revendication 5 ou 6, **caractérisé en ce que** la structure en grille présente au moins un entretoisement longitudinal (10) dans la zone des éléments à caractéristiques PTC (3).

8. Dispositif de chauffage électrique selon l'une des revendications 1 à 7, **caractérisé en ce que** le carter (2) est fabriqué en matière synthétique.

9. Dispositif de chauffage électrique selon l'une des revendications 1 à 8, **caractérisé en ce que** le carter (2) présente des moyens de positionnement (5), pour maintenir à distance mutuelle les éléments chauffants à caractéristiques PTC (3).

10. Dispositif de chauffage électrique selon l'une des revendications 1 à 9, **caractérisé en ce que** le carter (2) comprend deux demi-coques (2a, 2b).

11. Dispositif de chauffage électrique selon la revendication 10, **caractérisé en ce que** les demi-coques (2a, 2b) du carter (2) sont assemblables par emboîtement.

12. Dispositif de chauffage électrique selon la revendication 11, **caractérisé par** des tétons d'encliquetage (18) ou des ergots d'encliquetage (31), qui, lors de l'assemblage par emboîtement des demi-coques (2a, 2b) du carter (2), provoquent un encliquetage des deux demi-coques (2a, 2b).

13. Dispositif de chauffage électrique selon l'une des revendications 10 à 12, **caractérisé en ce que** les demi-coques (2a, 2b) sont réalisées de manière qu'elles séparent le carter (2) à peu près centralement entre les faces frontales de carter allongées.

14. Dispositif de chauffage électrique selon la revendication 13, **caractérisé par** des saillies (16, 17 ; 32a, 32b) opposées respectives sur la ligne de séparation des demi-coques (2a, 2b), qui s'engagent les unes dans les autres lors de l'assemblage des demi-coques (2a, 2b).

15. Dispositif de chauffage électrique selon l'une des revendications 1 à 14, **caractérisé en ce que** l'élément formant ressort (12) est formé d'une pièce en tôle (25), avec des segments de ressort (26) ressortant de celle-ci.

16. Dispositif de chauffage électrique selon la revendication 15, **caractérisé en ce que** les segments de ressort (26) vont chaque fois jusqu'aux zones de bordure des côtés longitudinaux des éléments formant ressort (12).

17. Dispositif de chauffage électrique selon la revendication 16, **caractérisé en ce que** l'élément formant ressort (12) est réalisé d'une seule pièce avec les segments de ressort (26).

18. Dispositif de chauffage électrique selon l'une des revendications 15 à 17, **caractérisé en ce qu'**au moins un segment de ressort (26) est prévu pour produire des efforts de serrage à chaque position d'éléments chauffants à caractéristiques PTC, pour obtenir un serrage par une liaison à interaction de forces.

19. Dispositif de chauffage électrique selon la revendication 18, **caractérisé en ce que**, pour chaque position d'éléments de chauffage à caractéristiques PTC, sont prévus au moins deux segments de ressort (26).

20. Dispositif de chauffage électrique selon l'une des revendications 1 à 19, **caractérisé par** au moins un joint d'étanchéité (24), pour fermer hermétiquement les entretoises longitudinales (10) par rapport aux éléments chauffants à caractéristiques PTC (3).

21. Dispositif de chauffage électrique selon la revendication 20, **caractérisé en ce que** le joint d'étanchéité (24) ferme hermétiquement l'ensemble de la structure à grille (9, 10).

22. Dispositif de chauffage électrique selon la revendication 21, **caractérisé en ce que** le joint d'étanchéité (24) est réalisé chaque fois d'une seule pièce pour un côté du carter.

23. Carter pour un dispositif de chauffage électrique, en particulier en tant que chauffage d'appoint pour des véhicules automobiles, pour recevoir une structure à couches, formée d'au moins un élément chauffant à caractéristiques PTC (3), d'un élément rayonnant (4), de tôles de contact (5, 6) pour l'alimentation électrique et d'un élément formant ressort (12), le carter (2) étant réalisé de manière que les efforts, générés par élément formant ressort (12), puissent être supportés par le carter (2),
**caractérisé en ce que**
le carter présente une ouverture (11) latérale pour l'insertion de l'élément formant ressort (12).

24. Carter selon la revendication 23, **caractérisé par** un canal à ressort, réalisé dans le carter pour l'insertion l'élément formant ressort (12).

25. Carter selon la revendication 23 ou 24, **caractérisé par** des moyens de positionnement (34) dans le carter, pour assurer la préfixation des éléments du dispositif de chauffage.

26. Carter selon la revendication 25, **caractérisé en ce que** les moyens de positionnement (34) dans le carter forment simultanément une rainure, devant assurer le guidage de l'élément formant ressort (12).

27. Carter selon l'une des revendications 23 à 26, **caractérisé en ce que** les faces frontales de carter allongées sont renforcées mécaniquement par au moins un entretoisement transversal (9).

28. Carter selon la revendication 27, **caractérisé en ce que** les entretoisements (9, 10), réalisées dans les faces frontales de carter allongées ouvertes, présentent la forme d'une structure en grille.

29. Carter selon la revendication 27 ou 28, **caractérisé en ce que** le carter est fabriqué en matière synthétique.

30. Procédé de fabrication d'un dispositif de chauffage (1) électrique, en particulier en tant que chauffage d'appoint pour des véhicules automobiles, avec un carter (2) formé de deux demi-coques (2a, 2b), réalisés en étant ouvert sur les faces frontales allongées du carter, et une structure à couches, formée d'au moins un élément chauffant à caractéristiques PTC (3), d'un élément rayonnant (4), de tôles de contact (6, 7) pour l'alimentation électrique et d'un élément formant ressort (12), sachant que la structure à couche est maintenue enserrée dans le carter (2) au moyen de élément formant ressort (12), présentant les étapes de montage suivantes :
insertion des tôles de contact (6, 7) de l'élément rayonnant (4) et de l'élément chauffant à caractéristiques PTC, dans une première demi-coque (2a) du carter,
adjonction par emboîtement de la deuxième demi-coque (2b) du carter (2) sur la première demi-coque (2a) ; et
insertion de l'élément formant ressort (12) par une ouverture (11) du carter (2) ayant été assemblé, pour provoquer un serrage de la structure à couches avec précontrainte de la structure à couches, en appui sur le carter (2).
